# FASCICULE DE BREVET EUROPEEN

(11) **EP 3 588 387 B1**
(45) Date de publication et mention de la délivrance du brevet: **06.09.2023**
(21) Numéro de dépôt: 19181533.1
(22) Date de dépôt: 20.06.2019
(51) Int. Cl.: G06N 3/04, G06N 3/08, G08G 5/00

(54) **PROCÉDÉ DE TEST D'UN SYSTÈME ÉLECTRONIQUE DE CONTRÔLE DU TRAFIC AÉRIEN, DISPOSITIF ÉLECTRONIQUE ET PLATE-FORME ASSOCIÉS**
VERFAHREN ZUM TESTEN EINES ELEKTRONISCHEN KONTROLLSYSTEMS DES LUFTVERKEHRS, ENTSPRECHENDE ELEKTRONISCHE VORRICHTUNG UND PLATTFORM
METHOD FOR TESTING AN ELECTRONIC AIR TRAFFIC CONTROL SYSTEM, ASSOCIATED ELECTRONIC DEVICE AND PLATFORM

(30) Priorité: 21.06.2018 FR 1800642
(43) Date de publication de la demande: 01.01.2020
(73) Titulaire: Thales, 92400 Courbevoie (FR)
(72) Inventeur: PESQUET-POPESCU, Béatrice, 77700 Bailly Romainvilliers (FR); KAAKAI, Fateh, 91120 Palaiseau (FR); BARBARESCO, Frédéric, 91230 Montgeron (FR)
(74) Mandataire: Lavoix

(56) Documents cités:
- US-A1- 2016 314 692
- FABRY J M ET AL: "APPLICATIONS OF SIMULATION AND ARTIFICIAL INTELLIGENCE TECHNOLOGY FOR ATC TRAINING", PROCEEDINGS OF THE IEEE, IEEE. NEW YORK, US, vol. 77, no. 11, 1 novembre 1989 (1989-11-01), pages 1762-1765, XP000101190, ISSN: 0018-9219, DOI: 10.1109/5.47738
- THAENS R ET AL: "Mission-based radar optimisation via Automated Scenario Recognition", 2018 19TH INTERNATIONAL RADAR SYMPOSIUM (IRS), GERMAN INSTITUTE OF NAVIGATION - DGON, 20 juin 2018 (2018-06-20), pages 1-10, XP033393935, DOI: 10.23919/IRS.2018.8448143
- NANDURI ANVARDH ET AL: "Generating Flight Operations Quality Assurance (foqa) data from the X-Plane Simulation", 2016 INTEGRATED COMMUNICATIONS NAVIGATION AND SURVEILLANCE (ICNS), IEEE, 19 avril 2016 (2016-04-19), pages 5C1-1-5C1-9, XP032909944, DOI: 10.1109/ICNSURV.2016.7486355
- BAOMAR HAITHAM ET AL: "Autonomous navigation and landing of large jets using Artificial Neural Networks and learning by imitation", 2017 IEEE SYMPOSIUM SERIES ON COMPUTATIONAL INTELLIGENCE (SSCI), IEEE, 27 November 2017 (2017-11-27), pages 1-10, XP033312458, DOI: 10.1109/SSCI.2017.8280916 [retrieved on 2018-02-02]

## Description

La présente invention concerne le domaine des systèmes électroniques de contrôle du trafic aérien, typiquement les systèmes électroniques dits ATM, de l'anglais « Air Traffic Management ». Un tel système assure l'interfaçage entre d'une part un contrôleur aérien, par exemple en charge d'un secteur géographique donné, et d'autre part les aéronefs situés au sein du secteur géographique ou d'autres contrôleurs aériens, notamment ceux en charge des secteurs géographiques voisins.

Un tel système reçoit des données de systèmes externes (données météorologiques, plans de vol d'aéronef, détection de radars, messages de contrôleurs aériens de secteurs voisins etc.), traite ces données, éventuellement les combine entre elles etc., puis restitue, via une IHM (interface homme-machine), au contrôleur aérien ces données ou les informations issues des traitements. Le contrôleur aérien, en fonction de ces données et informations, détermine des instructions de contrôle aérien (des commandes destinées aux aéronefs, des messages aux contrôleurs voisins comprenant des informations données etc.) et les saisit via l'IHM. Le système traite ensuite ces commandes.

Un tel système est régulièrement soumis à des tests de validation et d'intégration. De façon connue, de tels tests de validation et intégration visent à vérifier le bon fonctionnement du système, et à détecter d'éventuels bugs, tout d'abord chez le constructeur du système, puis une fois le système installé sur le site d'exploitation. Ils permettent par exemple de vérifier la conformité du comportement du système avec les spécifications, tant interne qu'au niveau de ses échanges avec les interfaces extérieures, de tester ses performances, par exemple les temps de réponse, et sa robustesse. Ces tests de validation et d'intégration ont lieu avec des données d'entrée prédéfinies ou non.Ces tests doivent être réalisés lors de l'introduction de nouvelles fonctionnalités dans le système électronique de contrôle du trafic aérien ou pour tester la non-régression des fonctionnalités existantes. Ils nécessitent la participation, pendant des jours, voire des semaines, de contrôleurs aériens pour interagir avec le système, de la même manière que lors d'un usage opérationnel classique, ce qui est un frein à la mise en oeuvre de tests complets et intensifs, et ce faisant au déploiement rapide des évolutions techniques de ces systèmes.

A titre d'exemple, une fonctionnalité connue d'un système de contrôle aérien est la détection de conflits, où une alerte est générée si le système détecte un risque de collision entre deux aéronefs dans les prochaines n minutes (par exemple, n = 3). Dans un tel cas, en étant ainsi notifié par l'alerte et au vu des autres données fournies par le système concernant l'état courant du trafic aérien et de l'environnement aérien, le contrôleur donne des commandes audits aéronefs et communique le cas échéant avec les contrôleurs des secteurs voisins via leur système ATM respectif.

Quand la méthode de détection de conflit change, par exemple par l'utilisation d'un nouvel algorithme de détection de conflits, des tests sont mis en oeuvre, comprenant la fourniture au système ATM de données d'entrée qui sont ensuite traitées et/ou affichées, leur analyse par le contrôleur aérien, la fourniture d'instructions par ce dernier, puis le traitement par le système ATM de ces instructions, le comportement du système étant supervisé pour détecter des incohérences, des dérives , des régressions etc.

Une autre fonctionnalité d'un système ATM est par exemple la supervision des distances de sécurité entre aéronefs. Lorsque la forme de restitution de cette fonctionnalité change, des tests doivent également être mise en oeuvre.

Par exemple, le document U82016314692 enseigne un système de gestion du trafic aérien et plus spécifiquement, la fourniture d'intentions prédites pour des opérations d'avions et la fourniture d'alertes pour éviter des collisions.

Le document FABRY J M ET AL: "APPLICATIONS OF SIMULATION AND ARTIFICIAL INTELLIGENCE TECHNOLOGY FOR ATC TRAINING", PROCEEDINGS OF THE IEEE, IEEE.NEW YORK, US, vol. 77, no. 11, 1 novembre 1989, pages 1762-1765, ISSN: 0018-9219, DOI: 10.1109/5.47738 divulgue un outil de formation d'entraînement adaptative de contrôleurs de trafic aérien à l'aide de technologies d'intelligence artificielle.

Le document BAOMAR HAITHAM ET AL: "Autonomous navigation and landing of large jets using Artificial Neural Networks and learning by imitation", 2017 IEEE SYMPOSIUM SERIES ON COMPUTATIONAL INTELLIGENCE (SSCI), IEEE, 27 novembre 2017, pages 1-10,DOI:10.1109/ SSCI.2017.8280916 enseigne un système de navigation et atterrissage autonomes d'avions à l'aide de réseaux de neurones artificiels.

Il existe donc un besoin de faciliter la mise en oeuvre de tests de systèmes électroniques de contrôle du trafic aérien.

A cet effet, suivant un premier aspect, l'invention propose un procédé de test d'un système électronique de contrôle du trafic aérien selon la revendication 1.
L'invention permet ainsi la réalisation de tests de systèmes électroniques de contrôle du trafic aérien de durée et d'intensité beaucoup plus élevés, ce qui permet d'accélérer et de fiabiliser la mise en service opérationnelle des nouvelles fonctionnalités ou plus généralement des nouvelles versions de ces systèmes.

Dans des modes de réalisation, le procédé de test suivant l'invention est selon l'une quelconque des revendications 2 à 5.

Suivant un deuxième aspect, la présente invention propose un dispositif électronique de test d'un système électronique de contrôle du trafic aérien selon la revendication 6.

Dans des modes de réalisation, le dispositif de test suivant l'invention est selon la revendication 7 ou 8.

Suivant un troisième aspect, la présente invention propose une plate-forme de test d'un système électronique de contrôle du trafic aérien selon la revendication 9.

Ces caractéristiques et avantages de l'invention apparaîtront à la lecture de la description qui va suivre, donnée uniquement à titre d'exemple, et faite en référence aux dessins annexés, sur lesquels :
- la figure 1 représente une vue d'une plate-forme de tests dans un mode de réalisation de l'invention ;
- la figure 2 est un organigramme d'étapes mises en oeuvre dans un mode de réalisation de l'invention.

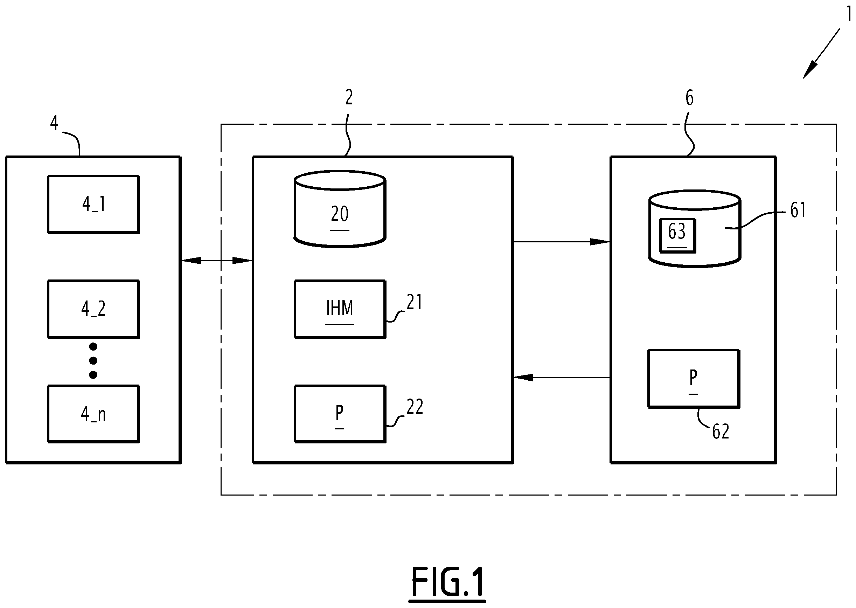

La figure 1 représente une plate-forme de tests 1 d'un système électronique de contrôle du trafic aérien. La plate-forme de tests 1 comprend dans l'exemple considéré un système électronique de contrôle du trafic aérien 2, nommé système ATM 2 ci-après, et un dispositif électronique de test 6.

Le système ATM 2 comprend une mémoire 20, un bloc IHM 21 et un processeur 22.

Le bloc IHM 21 comprend par exemple des écrans d'affichage, par exemple tactiles, un système de haut-parleur, un clavier, un microphone ...

Par ailleurs, le système ATM 2 est relié par des liaisons de télécommunications à un ensemble 4 de systèmes extérieurs 4_1, 4_2, ..., 4_n.

Ces systèmes extérieurs comprennent par exemple, des aéronefs, des radars, des stations météorologiques, des dispositifs de télécommunication d'autres contrôleurs aériens, des salles de contrôle d'aéroport ...

Le système ATM 2 est adapté pour recevoir, et stocker dans sa mémoire 20, des données d'entrée (et l'estampillage temporel de ces données).

Ces données d'entrée comprennent des données externes, i.e. qui lui sont délivrées par les systèmes extérieurs 4_1, 4_2, ..., 4_n de l'ensemble 4 représentant l'état courant ou à venir de l'espace aérien (ou d'un secteur donné de l'espace aérien) comprenant par exemple, de façon non exhaustive :
- pour chaque aéronef couramment ou sous peu dans le secteur : coordonnées en 3 dimensions (3D), type d'aéronef, son cap, sa vitesse, son plan de vol ;
- informations météorologiques courantes et à venir ;
- indices de densité du trafic aérien (tels que nombre d'avions dans le secteur, turbulences ), données définissant la structure courante, et à venir, de l'espace aérien (telles que la présence de zones d'interdiction militaires, de couloirs aériens , configuration, courante et à venir, de l'aéroport (pistes ouvertes, direction des vents, voies de taxi disponibles..., données de surveillance (telles qu'issues de radars primaires et secondaires, données ADS-B, WAM, ... ;
- messages de coordination avec des contrôleurs aériens opérant sur des systèmes ATM relatifs à des secteurs adjacents.

Le système ATM 2 est en outre adapté pour restituer ces données au contrôleur aérien, via le bloc IHM 21.

Les données externes peuvent être en outre traitées (par exemple moyennées, vérifiées, combinées entre elles, analysées, etc.) avant restitution.

Les données d'entrée comportent également ces données traitées et leur estampillage temporel.

Le système ATM 2 est en outre adapté pour générer des données internes au système ATM 2, représentatives de son état courant. Elles sont générées notamment à l'aide de sondes ou de fonctions installées dans le système ATM 2 et comprennent, par exemple, de façon non exhaustive :
une file d'attente de messages, des données partagées, des logs, des traces techniques, une action de focalisation sur une étiquette de vol , facteur d'agrandissement ou de dézoomage sur une zone donnée, transcription de conversation vocale entre un contrôleur et un pilote d'aéronef, etc. Les données internes sont accessibles au contrôleur aérien opérant le système ATM 2 via l'IHM 21. Dans un mode de réalisation, les données d'entrée stockées dans la mémoire 20 comportent également ces données internes, avec l'estampillage temporel correspondant audites données.

Dans un mode de réalisation, le système ATM 2 est adapté pour mettre en oeuvre des fonctions évoluées utilisant les externes et générant des données internes. Ces fonctions sont mises en oeuvre par exemple à l'aide de programmes d'ordinateur implémentant la fonction, qui sont stockés dans la mémoire 20 et exécutées sur le processeur 22. Ces fonctions comprennent par exemple la détection de conflits, identifiant un risque de collision entre un aéronef et un autre aéronef, ou un risque de pénétration d'un aéronef dans une zone pendant une période d'interdiction de vol dans la zone etc., ou la détermination d'une solution permettant de résoudre le conflit. Les résultats de ces fonctions sont restitués via l'IHM 21, au contrôleur aérien.

De façon connue, un contrôleur aérien opérant le système ATM 2 peut ainsi prendre connaissance, via l'IHM 21, à chaque instant, de la situation aérienne courante ou à venir, en fonction des données externes et/ou en fonction des données internes, y compris les résultats des fonctions évoluées. Ces données et résultats lui sont fournis via l'IHM 21. En fonction de ces éléments, le contrôleur aérien, prend, alors des décisions qu'il fournit au système ATM 2 via l'IHM 21 (sous forme textuelle ou visuelle ou vocale ...).

Ces décisions, comprennent des instructions destinées aux aéronefs et/ou aux systèmes ATM de contrôleurs de secteurs adjacents. Elles peuvent ainsi comprendre des commandes d'altitude de vol cible, de vitesses (horizontale, verticale) cible, de cap cible, de pente cible de montée ou de descente etc.

Le dispositif électronique de test 6 comprend une mémoire 61 et un processeur 62. Dans la mémoire 61, un réseau de neurones artificiels 63 est notamment stocké.

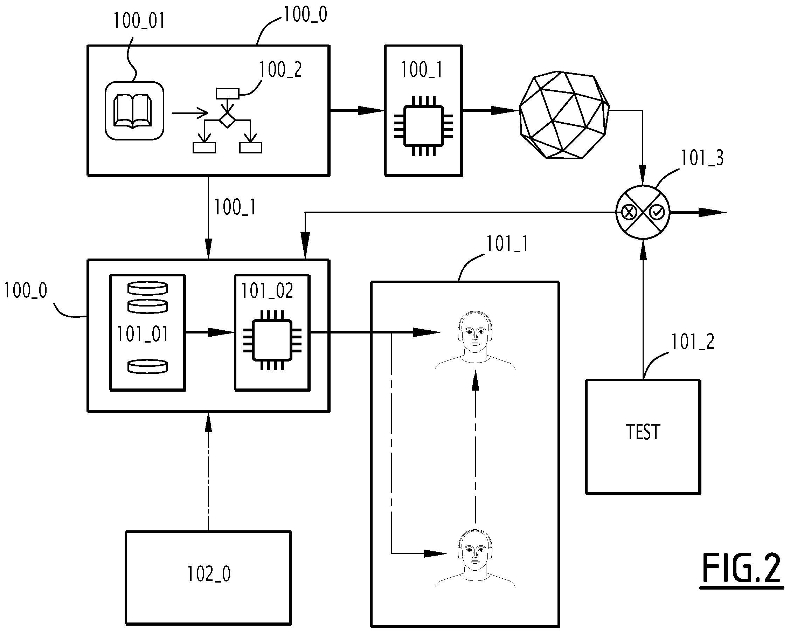

La figure 2 est un organigramme d'étapes mises en oeuvre dans un mode de réalisation de l'invention

Le réseau de neurones 63 est adapté pour, dans une phase préliminaire 101_0 d'obtention du réseau programmé, effectuer un apprentissage du comportement de contrôleur(s) aérien(s), à partir d'un historique d'éléments d'entrée comportant des données externes des systèmes ATM, et comportant, dans des modes de réalisation, des données internes des systèmes ATM et/ou des résultats de fonctions, et à partir d'un historique d'éléments de sortie comprenant les décisions prises par les contrôleurs aériens au vu de ces éléments d'entrée respectifs.

Cet historique est par exemple constitué à partir de la collecte sur plusieurs mois, depuis le système ATM 2, ou un autre système ATM similaire au système ATM 2 ou depuis plusieurs systèmes ATM opérationnels, de l'ensemble de ces éléments et leur mémorisation. Dans un mode de réalisation, ladite mémorisation est effectuée dans la mémoire 20.

On notera que cette phase préliminaire 101_0 d'apprentissage du réseau de neurones 63, suivant les modes de réalisation :
- est mise en oeuvre, au sein du dispositif électronique de test 6, en utilisant la mémoire 61 et le processeur 62, ou
- est mise en oeuvre sur une plate-forme spécifique d'apprentissage (non représentée), dotée de ses propres ressources de mémoire et de calcul.

Dans un mode de réalisation, pour chaque configuration de test, la phase préliminaire 101_0 comprend une phase de préparation 101_01 des éléments d'entrée et de sortie identifiant quels sont (les extraits de) ceux des éléments d'entrée et de sortie utiles au test, dans la prise de décision, ainsi par exemple que la durée de collecte minimum.

De façon connue, la préparation de ces éléments peut comprendre la segmentation des éléments recueillis, la détection d'éléments manquants et d'aberrations, la réduction des dimensions des éléments, l'extraction de groupes, l'identification de causes et relations, et pour finir la définition d'un jeu d'éléments d'entraînement comprenant des éléments d'entraînement d'entrée et des éléments de sortie associés. Pour chaque configuration de test, la phase préliminaire 101_0 comprend une phase d'entraînement 101_02 à proprement parler du réseau de neurones 63 à partir des éléments d'entraînement d'entrée et de sortie associés du jeu d'éléments d'entraînement. Un réseau de neurones par configuration de test est ainsi déterminé.

Ces principes de définition de jeux de données d'entraînement, d'apprentissage et d'utilisation de réseaux de neurones sont bien connus : cf. par exemple :
- Tolk, A. (2015, July). The next génération of modeling & simulation: integrating big data and deep learning. In Proceedings of the Conférence on Summer Computer Simulation (pp. 1-8). Society for Computer Simulation International ;
- Akerkar, R. (2014). Analytics on Big Aviation Data: Turning Data into Insights. IJCSA, 11 (3),116-127 ;
- Boci, E., & Thistlethwaite, S. (2015, April). A novel big data architecture in support of ADS-B data analytic. In Integrated Communication, Navigation, and Surveillance Conference (ICNS), 2015 (pp. C1-1). IEEE ;
- Bengio, Y. (2009). Learning deep architectures for Al. Foundations and trends® in Machine Learning, 2(1), 1-127.

Le résultat de la phase d'entraînement 101_02 est la délivrance 101_1 d'un réseau de neurones entraîné 63, encore appelé modèle (algorithmique) de contrôleur aérien. Ce modèle est ensuite enregistré dans le dispositif électronique 6, qui est alors apte à être utilisé en phase de test 101 _2 pour tester le système ATM 2.

Dans des modes de réalisation, les éléments d'entrée et de sortie sont structurés par secteur géographique aérien, l'entraînement du réseau de neurones est alors différentié également par secteur, et le comportement du modèle algorithmique de contrôleur aérien 63 obtenu à l'étape 101_1 est spécifique à chaque secteur.

Similairement, dans des modes de réalisation, les jeux d'éléments d'entraînement sont structurés par fonctionnalité technique du système ATM (par exemple détection de conflits ou commandes d'altitude de vol ou coordination entre contrôleurs) ou par rôle spécifique d'un contrôleur de l'air (par exemple, rôle de commande ou rôle de planification et d'échange avec les secteurs adjacents). Dans un tel cas, le modèle entraîné obtenu est alors spécifique à un rôle ou à une fonctionnalité. Des modes mixtes peuvent en outre être générés, spécifiques à au moins deux aspects parmi les aspects de secteur, de fonctionnalité et de rôle.

Tout type de réseaux de neurones artificiels peut être utilisé. Par exemple, un réseau d'apprentissage profond, de l'anglais « deep learning network », un réseau de neurones convolutif CNN, de l'anglais « Convolutional Neural Network » sont utilisés. Le nombre de noeuds d'entrée sera choisi égal au nombre d'éléments d'entrée et le nombre de noeuds de sortie sera choisi égal au nombre d'éléments de sortie pour chaque configuration de test.

Lors d'une phase de test 101_2 du système ATM 2, les étapes suivantes sont mises en oeuvre et réitérées :
- réception par le système ATM 2 de données externes représentatives de l'état courant d'un trafic aérien ;
- établissement, par ledit système ATM 2, d'informations relatives au trafic aérien en fonction desdites données, comprenant certaines au moins des données externes, ainsi que de données internes mises à jour, par exemple des résultats de fonctions du système ATM 2 et délivrance, par ledit système 2, via l'IHM 21, des informations au dispositif électronique de test 6 ;
- détermination par le réseau de neurones 63 du dispositif électronique de test 6, en fonction des informations délivrées, d'éléments de sortie comprenant des décisions de contrôle de trafic aérien ; ces décisions comprennent des instructions destinées aux aéronefs et/ou aux systèmes ATM de contrôleurs de secteurs adjacents ;
- et fourniture par le dispositif de test 6 via l'IHM 21 audit système ATM 2 desdits éléments de sortie ;
- réception et traitement desdits éléments de sortie par ledit système 2, comprenant la transmission des décisions aux aéronefs et/ou aux systèmes ATM de contrôleurs de secteurs adjacents.

Les non-conformités du système sont détectées lors de la phase de tests, par analyse du comportement du système 2. Cette détection est faite par exemple par le dispositif de test 6 ou tout autre moyen.

Plusieurs types de test visant des finalités distinctes peuvent être mis en oeuvre dans la phase de test 101_2 existent.

Un type de test est par exemple une campagne de test de vérification extensive, basée sur des données d'entrée (i.e. données internes, voire en outre données externes) réelles du système ATM2, à partir desquelles des jeux de test de données d'entrée du modèle de contrôleur sont générés aléatoirement (certains dans les plages admises, d'autres en-dehors des plages admises pour tester la robustesse). Les décisions du modèle de contrôleur 63 seront conformes au comportement du contrôleur humain tel qu'appris.

Un autre type de phase de test est par exemple une campagne de test de non-régression : dans un tel cas, on teste, en utilisant le dispositif de test 6 basé sur le modèle de contrôleur 63 généré avant évolution du système ATM 2, le système ATM2 prenant en compte l'évolution en fournissant au système ATM 2 des données d'entrée externes égales à celles ayant permis d'apprendre précédemment ce modèle de contrôleur. S'il n'y a pas d'injection dans le système ATM 2 de déviation fonctionnelle de la spécification (bug logiciel, effet de bord d'un changement technique telle que mise à jour matérielle ...), il est attendu d'avoir exactement les mêmes décisions de sortie délivrées par le dispositif de test 6. Dans le cas contraire, il y a potentiellement une régression dans le système ATM 2 et des investigations additionnelles doivent être menées.

Un autre type de phase de test est par exemple une campagne de test d'endurance : une telle campagne est similaire à une campagne de non-régression si ce n'est que l'objectif est différent. L'objet d'une campagne de test d'endurance est d'exploiter le précédent statut des tests de non-régression pour bâtir une expérience de service, qui sera :
- effectuée à un stade précoce du cycle de vie du système ATM 2, i.e. avant la transition opérationnelle,
- effectuée de manière accélérée en dupliquant de nombreuses instances du système ATM 2 à valider et de nombreuses instances de modèles de contrôleurs et de jeux de données d'entrée de test.

Un système ATM 2 évoluant régulièrement, les mises à jour tant fonctionnelles (introduction de nouvelles fonctions ou de fonctions modifiées) que techniques (changements de matériels, de système d'exploitation etc.) sont à prendre en compte dans les tests. Dans une telle situation, dans un mode de réalisation, le modèle algorithmique 63 correspondant au système ATM 2 avant mise à jour est complété pour prendre en compte ces mises à jour. Ainsi en référence à la figure 2, dans une étape 102_0, des éléments d'entrée comportant des données internes des systèmes ATM, des données externes des systèmes ATM, et des éléments de sortie comprenant les décisions prises par les contrôleurs aériens au vu de ces éléments d'entrée respectifs, sont enregistrés et stockés pendant des sessions de validation réalisées par des contrôleurs aériens sur une plate-forme de test représentative de la plate-forme opérationnelle relatives à la partie qui est mise à jour du système ATM 2. L'étape 101_0 d'obtention d'un réseau de neurones programmé est alors mise en oeuvre sur la base de ces éléments d'entrée et de sortie, et donne lieu à la délivrance d'un modèle de contrôleur de réseau aérien ciblée sur la partie du système ATM 2 qui est mise à jour. Dans l'étape 101_1, une combinaison du modèle algorithmique correspondant au système ATM 2 avant mise à jour et du modèle algorithmique du système ATM 2 ciblé sur les aspects mis à jour est réalisée (par exemple, dans des modes de réalisation, par une concaténation), permettant ainsi de délivrer un modèle algorithmique complet correspondant au système ATM 2 mis à jour. Par ailleurs, dans un mode de réalisation, dans une étape 100_0 de sécurisation, des règles, principes, contraintes, conditions et interdictions mises en oeuvre par les contrôleurs aériens dans l'application de leur métier (correspondant par exemple aux normes ICAO telles que définies dans le document 4444) sont formalisées sous forme algorithmique.

Par exemple, il figure parmi ces règles que :
- a1/ un contrôleur aérien ne peut pas fournir de commandes concernant des aéronefs en-dehors du secteur dont il est en charge,
- a2/ sauf pour certaines exceptions définies précisément par les conditions Cond1, Cond2, Cond3 ;
- a3/ dans une situation donnée correspondant à une vitesse et une altitude d'aéronef donnée, un changement commandé d'altitude de niveau de vol doit être inférieur à un seuil donné dépendant desdites vitesse et altitudes.

L'algorithme de sécurisation résultant est, dans un mode de réalisation, mis en oeuvre dans une étape 100_1 sur les éléments d'entraînement d'entrée et de sortie associés du jeu d'éléments d'entraînement préalablement à la construction d'un modèle de contrôleur aérien, ce qui permet de détecter les éléments non conformes à la pratique normée, et ensuite soit de les supprimer du jeu d'éléments d'entraînement, soit de les affecter à une classe de « mauvaise pratique » permettant au modèle d'autant mieux apprendre le comportement de contrôleur conforme à une « bonne pratique ».

Dans un mode de réalisation, dans une étape 100_1, ces règles, principes, contraintes, conditions et interdictions mises en oeuvre par les contrôleurs aériens dans l'application de leur métier sont également fournies comme données d'apprentissage à un réseau de neurones artificiels, et, à l'issue de la phase d'apprentissage, un modèle englobant ces règles est délivré, nommé ci-après modèle de sécurisation. Dans une étape 101_3, chaque décision ensuite prise par le modèle de contrôleur 63 lors de phase de tests 101_2 est fournie à ce modèle de sécurisation, qui soit valide la décision comme conforme à la bonne pratique (notamment valide qu'elle se trouve dans la gamme dynamique acceptable pour les décisions de sortie), soit invalide la décision qui n'est alors pas prise en compte dans le cadre des tests et vient par exemple alors enrichir la classe de « mauvaise pratique », ce qui a pour effet de renforcer le modèle de contrôleur aérien.

La présente invention permet ainsi d'obtenir un dispositif électronique de test 6 basé sur un modèle de contrôleur aérien 63 appris par réseau de neurones.

Dans les phases de test, le modèle de contrôleur aérien 63 obtenu peut être dupliqué et chaque copie peut être installée dans le même dispositif électronique 6 ou installée dans des dispositifs de test respectifs similaires au dispositif 6 ; ceci permet d'augmenter le nombre et l'étendue des tests effectués en parallèle sur le système ATM 2, voire sur des instances également dupliquées (sur le nuage informatique, de l'anglais « cloud » par exemple) du système ATM 2. Dans des modes de réalisation de la phase de test mis en oeuvre à l'aide de ces dispositifs, les données d'entrée peuvent être réparties entre les différents modèles ou dispositifs, chaque modèle étant affecté à un secteur spécifique distinct, ou à une période temporelle distincte (heures de pointe, hors heures de pointe, périodes hebdomadaire, mensuelle....)

Dans un autre mode de réalisation, le modèle 63 de réseau de neurones est réalisé sous forme d'un composant logique programmable, tel qu'une carte GPU (de l'anglais *Graphics Processing Unit*) ou multi-GPU.

## Revendications

1. Procédé de test d'un système électronique de contrôle du trafic aérien (2) délivrant des informations relatives au trafic aérien établies en fonction de données d'entrée représentatives de l'état du trafic aérien reçues par ledit système, ledit système en outre recevant, et traitant, en phase opérationnelle, des instructions de contrôle de trafic aérien qui lui sont fournies par au moins un contrôleur de trafic aérien,
ledit procédé étant **caractérisé en ce qu'**il comprend, pendant une phase de test dudit système de contrôle de trafic aérien pour tester le bon fonctionnement dudit système de contrôle de trafic aérien, les étapes de :
- réception par ledit système (2) de données d'entrée représentatives de l'état d'un trafic aérien ;
- établissement, par ledit système, d'informations relatives au trafic aérien en fonction desdites données d'entrée et délivrance, par ledit système, desdites informations à un dispositif électronique (6) de test du système ;
- détermination par ledit dispositif électronique (6) de test du système, en fonction des informations délivrées, d'instructions de contrôle de trafic aérien et fourniture audit système desdites instructions ;
- réception et traitement desdites instructions par ledit système ;
selon lequel ledit dispositif électronique (6) comprend un modèle algorithmique (63) de détermination automatique d'instructions de contrôle de trafic aérien en fonction des informations relatives au trafic aérien, ledit modèle ayant été obtenu lors d'une phase d'apprentissage, mise en oeuvre par ordinateur, d'un réseau de neurones d'apprentissage profond, en fonction d'un ensemble d'instructions de contrôle de trafic aérien précédemment fournies par au moins un contrôleur aérien au système de contrôle de trafic aérien et des informations relatives au trafic aérien associées audites instructions.

2. Procédé de test d'un système électronique (2) de contrôle du trafic aérien selon la revendication 1, comprenant pendant la phase de test, la détection de non-conformité(s) du système en fonction du comportement du système.

3. Procédé de test d'un système électronique (2) de contrôle du trafic aérien selon la revendication 1 ou 2, selon lequel le modèle algorithmique (63) de détermination automatique d'instructions a été appris pour déterminer des instructions spécifiques à au moins un élément, en fonction d'une différentiation par élément parmi plusieurs éléments de même type, lors de l'apprentissage, des instructions précédemment fournies par au moins un contrôleur aérien au système et des informations relatives au trafic aérien associées audites instructions, ledit élément parmi plusieurs éléments de même type étant un secteur géographique parmi plusieurs secteurs géographiques et/ou un rôle de contrôleur aérien parmi plusieurs rôles et/ou une fonctionnalité du système électronique (2) de contrôle du trafic aérien parmi plusieurs fonctionnalités dudit système.

4. Procédé de test d'un système électronique de contrôle du trafic aérien selon l'une des revendications 1 à 3, comprenant les étapes de :
- détermination d'un module algorithmique de contraintes adapté pour identifier des instructions non conformes aux règles des contrôleurs de l'air ;
- application dudit module algorithmique sur l'ensemble d'instructions précédemment fournies par au moins un contrôleur aérien au système et retrait desdites instructions identifiées comme non conformes de l'ensemble utilisé pour l'apprentissage du réseau de neurones ;
- application dudit module algorithmique sur les instructions déterminées par le dispositif électronique de test et non considération dans la phase de test d'instruction(s) identifiée(s) comme non conformes.

5. Procédé de test d'un système électronique (2) de contrôle du trafic aérien selon l'une des revendications 1 à 4, comprenant, dans une phase préliminaire au test, les étapes de :
- collecte et stockage d'un ensemble d'instructions précédemment fournies au système par au moins un contrôleur aérien et des informations relatives au trafic aérien délivrées par le système associées audites instructions ;
- détermination du modèle algorithmique (63) de détermination automatique d'instructions en fonction des informations relatives au trafic aérien par apprentissage, mis en oeuvre par ordinateur, d'un réseau de neurones (63), en fonction dudit ensemble d'instructions stockées et desdites informations relatives au trafic aérien stockées et associées audites instructions.

6. Dispositif électronique (6) de test d'un système électronique (2) de contrôle du trafic aérien délivrant des informations relatives au trafic aérien établies en fonction de données d'entrée représentatives de l'état du trafic aérien reçues par ledit système, ledit système en outre recevant, et traitant des instructions de contrôle de trafic aérien qui lui sont fournies par au moins un contrôleur de trafic aérien,
ledit dispositif électronique (6) de test étant **caractérisé en ce qu'**il est adapté pour recevoir des informations relatives au trafic aérien délivrées par le système (2) et **en ce qu'**il est comprend un modèle algorithmique (63) de détermination automatique d'instructions en fonction des informations relatives au trafic aérien, ledit modèle ayant été obtenu lors d'une phase d'apprentissage, mise en oeuvre par ordinateur, d'un réseau de neurones d'apprentissage profond, en fonction d'un ensemble d'instructions de contrôle de trafic aérien précédemment fournies par au moins un contrôleur aérien au système et des informations relatives au trafic aérien associées audites instructions.

7. Dispositif électronique (6) de test selon la revendication 6, adapté pour détecter la non-conformité(s) du système en fonction du comportement du système.

8. Dispositif électronique (6) de test selon la revendication 6 ou 7, dans lequel le modèle algorithmique (63) de détermination automatique d'instructions a été appris pour déterminer des instructions spécifiques à au moins un élément, en fonction d'une différentiation par élément parmi plusieurs éléments de même type, lors de l'apprentissage, des instructions précédemment fournies par au moins un contrôleur aérien au système et des informations relatives au trafic aérien associées audites instructions, ledit élément parmi plusieurs éléments de même type étant un secteur géographique parmi plusieurs secteurs géographiques et/ou un rôle de contrôleur aérien parmi plusieurs rôles et/ou une fonctionnalité du système électronique (2) de contrôle du trafic aérien parmi plusieurs fonctionnalités dudit système.

9. Plate-forme de test (1) comprenant :
- un système électronique (2) de contrôle du trafic aérien délivrant des informations relatives au trafic aérien établies en fonction de données d'entrée représentatives de l'état du trafic aérien reçues par ledit système, ledit système en outre recevant, et traitant des instructions de contrôle de trafic aérien qui lui sont fournies par au moins un contrôleur de trafic aérien ; et
- un dispositif électronique de test dudit système électronique selon l'une des revendications 6 à 8.

10. Plate-forme de test (1) selon la revendication 9, dans laquelle la plate-forme est adaptée pour collecter l'ensemble d'instruction de contrôle de trafic aérien précédemment fournies au système, et dans laquelle la plate-forme est adaptée pour déterminer le modèle algorithmique en fonction des informations relatives au trafic aérien par apprentissage, mis en oeuvre par ordinateur, d'un réseau de neurones (63), en fonction dudit ensemble d'instructions stockées et desdites informations relatives au trafic aérien stockées et associées audites instructions.

## Patentansprüche

1. Verfahren zum Testen eines elektronischen System zur Flugverkehrskontrolle (2), das Informationen in Bezug auf Informationen in Bezug auf den Flugverkehr bereitstellt, die abhängig von Eingangsdaten erstellt werden, die repräsentativ für den Flugverkehr sind, wobei das System in der Betriebsphase ferner Flugverkehrskontrollanweisungen empfängt und verarbeitet, die ihm von mindestens einem Fluglotsen bereitgestellt werden,
wobei das Verfahren **dadurch gekennzeichnet ist, dass** es während einer Testphase des Systems zur Flugverkehrskontrolle zum Testen der ordnungsgemäßen Funktion des Systems zur Flugverkehrskontrolle die folgenden Schritte umfasst:
- Empfangen, durch das System (2), von Eingangsdaten, die repräsentativ für den Zustand eines Flugverkehrs sind;
- Erstellen, durch das System, von Informationen in Bezug auf den Flugverkehr basierend auf den Eingangsdaten und Ausgeben, durch das System, der Informationen an eine elektronische Vorrichtung (6) zum Testen des Systems;
- Bestimmen, durch die elektronische Vorrichtung (6) zum Testen des Systems abhängig von den bereitgestellten Informationen, von Anweisungen zur Flugverkehrskontrolle und Bereitstellen dieser Anweisungen an das System;
- Empfangen und Verarbeiten der Anweisungen durch das System;
wobei die elektronische Vorrichtung (6) ein Algorithmusmodell (63) zum automatischen Bestimmen von Flugverkehrskontrollanweisungen basierend auf Informationen in Bezug auf den Flugverkehr umfasst, wobei das Modell in einer computerimplementierten Lernphase eines neuronalen Deep-Learning-Netzes abhängig von einem Satz von Flugverkehrskontrollanweisungen, die zuvor von mindestens einem Fluglotsen an das Flugverkehrskontrollsystem bereitgestellt wurden, und von Informationen in Bezug auf den Flugverkehr, die mit den Anweisungen assoziiert sind, erlangt wurde.

2. Verfahren zum Testen eines elektronischen Systems (2) zur Flugverkehrskontrolle nach Anspruch 1, umfassend während der Testphase das Erkennen von Nichtkonformität(en) des Systems basierend auf dem Verhalten des Systems.

3. Verfahren zum Testen eines elektronischen Systems (2) zur Flugverkehrskontrolle nach Anspruch 1 oder 2, wobei das Algorithmusmodell (63) zum automatischen Bestimmen von Anweisungen gelernt wurde, um beim Lernen spezifische Anweisungen für mindestens ein Element zu bestimmen, basierend auf einer Differenzierung pro Element unter mehreren Elementen desselben Typs, der zuvor von mindestens einem Fluglotsen an das System bereitgestellten Anweisungen und der mit den Anweisungen assoziierten Informationen in Bezug auf den Flugverkehr, wobei das eine von mehreren Elementen desselben Typs ein geografischer Sektor von mehreren geografischen Sektoren und/oder eine Fluglotsenrolle von mehreren Rollen und/oder eine Funktion des elektronischen Systems (2) zu Flugverkehrskontrolle von mehreren Funktionen des Systems ist.

4. Verfahren zum Testen eines elektronischen Systems zur Flugverkehrskontrolle nach einem der Ansprüche 1 bis 3, umfassend die folgenden Schritte:
- Bestimmen eines Beschränkungsalgorhitmusmoduls, das angepasst ist, um nicht regelkonforme Anweisungen der Fluglotsen zu identifizieren;
- Anwenden des Algorithmusmoduls auf den Satz von Anweisungen, die zuvor von mindestens einem Fluglotsen an das System bereitgestellt wurden, und Entfernen der Anweisungen, die als nicht konform identifiziert werden, aus dem Satz, der zum Trainieren des neuronalen Netzes verwendet wird;
- Anwenden des Algorithmusmoduls auf die Anweisungen, die von der elektronischen Testvorrichtung bestimmt werden, und in der Testphase Nichtberücksichtigen von Anweisung(en), die als nicht konform identifiziert werden.

5. Verfahren zum Testen eines elektronischen Systems (2) zur Flugverkehrskontrolle nach einem der Ansprüche 1 bis 4, umfassend, in einer vorherigen Phase des Testens, die folgenden Schritte:
- Sammeln und Speichern eines Satzes von Anweisungen, die dem System zuvor von mindestens einem Fluglotsen an das System gegeben wurden, und der von dem System ausgegebenen Informationen in Bezug auf den Flugverkehr, die mit diesen Anweisungen assoziiert sind;
- Bestimmen des Algorithmusmodells (63) zum automatischen Bestimmen von Anweisungen basierend auf Informationen in Bezug auf den Flugverkehr durch computerimplementiertes Lernen eines neuronalen Netzes (63) abhängig von dem Satz von gespeicherten Anweisungen und den gespeicherten und mit den Anweisungen assoziierten Informationen in Bezug auf den Flugverkehr.

6. Elektronische Vorrichtung (6) zum Testen eines elektronischen Systems (2) zur Flugverkehrskontrolle, das Informationen in Bezug auf den Flugverkehr bereitstellt, die abhängig von Eingangsdaten erstellt werden, die repräsentativ für den Zustand des Flugverkehrs sind und von dem System empfangen werden, wobei das System ferner Flugverkehrskontrollanweisungen empfängt und verarbeitet, die ihm von mindestens einem Fluglotsen bereitgestellt werden, wobei die elektronische Vorrichtung (6) zum Testen **dadurch gekennzeichnet ist, dass** sie angepasst ist, um von dem System (2) bereitgestellte Informationen in Bezug auf den Luftverkehr zu empfangen, und dass sie ein Algorithmusmodell (63) zum automatischen Bestimmen von Anweisungen abhängig von den Informationen in Bezug auf den Luftverkehr umfasst, wobei das Modell in einer computerimplementierten Lernphase eines neuronalen Deep-Learning-Netzes abhängig von einem Satz von Flugverkehrskontrollanweisungen, die dem System zuvor von mindestens einem Fluglotsen bereitgestellt wurden, und von Informationen in Bezug auf den Flugverkehr, die mit den Anweisungen assoziiert sind, erlangt wurde.

7. Elektronische Testvorrichtung (6) zum Testen nach Anspruch 6, die angepasst ist, um die Nichtkonformität(en) des Systems basierend auf dem Verhalten des Systems zu erkennen.

8. Elektronische Vorrichtung (6) zum Testen nach Anspruch 6 oder 7, wobei das Algorithmusmodell (63) zum automatischen Bestimmen von Anweisungen gelernt wurde, um beim Lernen spezifische Anweisungen für mindestens ein Element zu bestimmen, basierend auf einer Differenzierung pro Element unter mehreren Elementen desselben Typs, der zuvor von mindestens einem Fluglotsen an das System bereitgestellten Anweisungen und der mit den Anweisungen assoziierten Informationen in Bezug auf den Flugverkehr, wobei das eine von mehreren Elementen desselben Typs ein geografischer Sektor von mehreren geografischen Sektoren und/oder eine Fluglotsenrolle von mehreren Rollen und/oder eine Funktion des elektronischen Systems (2) zu Flugverkehrskontrolle von mehreren Funktionen des Systems ist.

9. Testplattform (1) umfassend:
- ein elektronisches System (2) zur Flugverkehrskontrolle, das Informationen in Bezug auf Flugverkehrsinformationen bereitstellt, die abhängig von Eingangsdaten erstellt werden, die repräsentativ für den Flugverkehr sind, wobei das System ferner Flugverkehrskontrollanweisungen empfängt und verarbeitet, die ihm von mindestens einem Fluglotsen bereitgestellt werden; und
- eine elektronische Vorrichtung zum Testen des elektronischen Systems nach einem der Ansprüche 6 bis 8.

10. Testplattform (1) nach Anspruch 9, wobei die Plattform angepasst ist, um den Satz von Flugverkehrskontrollanweisungen zu sammeln, die dem System zuvor bereitgestellt wurden, und wobei die Plattform angepasst ist, um das Algorithmusmodell basierend auf den Informationen in Bezug auf den Flugverkehr durch computerimplementiertes Lernen eines neuronalen Netzes (63) basierend auf dem gespeicherten Satz von Anweisungen und den gespeicherten und mit den Anweisungen assoziierten Informationen in Bezug auf den Flugverkehr zu bestimmen.

## Claims

1. A test method for an air traffic control electronic control system (2) delivering information relative to air traffic control established as a function of input data representative of the state of the air traffic control received by said system, said system further receiving, and processing, in the operational phase, air traffic control instructions that are provided to it by at least one air traffic controller,
wherein said method comprises, during a test phase of said air traffic control electronic control system to test the correct operation of the air traffic control electronic control system, the following steps:
- reception by said system (2) of input data representative of the state of air traffic;
- establishment by said system of information relative to the air traffic as a function of said input data and delivery by said system of said information to an electronic test device (6) of the system;
- determination by said electronic test device (6) of the system, as a function of the delivered information, of air traffic control instructions and providing said system with said instructions;
- reception and processing of said instructions by said system;
according to which said electronic device (6) includes an algorithmic model (63) for automatically determining air traffic control instructions as a function of information relative to the air traffic, said model having been obtained during a learning phase, carried out by computer, of a deep learning neural network, as a function of a set of air traffic control electronic control instructions previously provided by at least one air traffic controller to the air traffic control electronic control system and information relative to the air traffic associated with said instructions.

2. The test method for an electronic air traffic control system (2) according to claim 1, comprising, during the test phase, the detection of one or more nonconformities of the system as a function of the behavior of the system.

3. The test method for an electronic air traffic control system (2) according to claim 1 or 2, the algorithmic model (63) for automatically determining instructions has been learned in order to determine instructions specific to at least one element, as a function of a determination by element from among several elements of the same type, during the learning of the instructions previously provided by at least one air traffic controller to the system and of the information relative to the air traffic control associated with said instructions, said element from among several elements of the same type being a geographical sector from among several geographical sectors and/or an air traffic controller role from among several roles and/or a functionality of the electronic control system (2) of the air traffic from among several functionalities of said system.

4. A method for testing an air traffic management electronic system according to one of claims 1 to 3, comprising the steps of:
- determining an algorithmic constraint module adapted for identifying instructions not compliant with the rules of the air traffic controllers;
- applying said algorithmic module to the set of instructions previously supplied by at least one air traffic controller to the system and removing said instructions identified as not compliant from the set used for the learning of the neural network;
- applying said algorithmic module to the instructions determined by the electronic test device and not considered in the phase for testing instruction(s) identified as not compliant.

5. The test method for an electronic air traffic control system (2) according to one of claims 1 to 4, comprising, in a phase preliminary to the test, the steps of:
- collecting and storing a set of instructions previously provided to the system by at least one air traffic controller and information relative to the air traffic controller delivered by the system associated with said instructions;
- determining the algorithmic model (63) for automatically determining instructions as a function of information relative to the air traffic controller by learning, carried out by computer, of a neural network (63), as a function of said stored set of instructions and said stored information relative to the air traffic and associated with said instructions.

6. An electronic test device (6) of an air traffic control electronic (2) control system delivering information relative to air traffic control established as a function of input data representative of the state of the air traffic control received by said system, said system further receiving, and processing air traffic control instructions that are provided to it by at least one air traffic controller,
wherein said electronic test device (6) is adapted for receiving information relative to the air traffic delivered by the system (2) and in that it includes an algorithmic model (2) for automatically determining instructions as a function of information relative to the air traffic, said model having been obtained during a learning phase, carried out by computer, of a deep learning neural network, as a function of a set of air traffic control instructions previously provided by at least one air traffic controller to the system and information relative to the air traffic associated with said instructions.

7. The electronic test device (6) according to claim 6, adapted for detecting the nonconformity of the system as a function of the behavior of the system.

8. The electronic test device (6) according to claim 6 or 7, wherein the algorithmic model (63) for automatically determining instructions has been learned in order to determine instructions specific to at least one element, as a function of a determination by element from among several elements of the same type, during the learning of the instructions previously provided by at least one air traffic controller to the system and of the information relative to the air traffic control associated with said instructions, said element from among several elements of the same type being a geographical sector from among several geographical sectors and/or an air traffic controller role from among several roles and/or a functionality of the electronic control system (2) of the air traffic from among several functionalities of said system.

9. A test platform (1) including:
- an air traffic control electronic control system (2) delivering information relative to air traffic control established as a function of input data representative of the state of the air traffic control received by said system, said system further receiving, and processing control instructions from air traffic control that are provided to it by at least one air traffic controller; and
- an electronic test device of said electronic system according to one of claims 6 to 8.

10. The test platform according to claim 9, wherein the platform is adapted for collecting a set of air traffic control instructions previously provided to the system, and wherein the platform is adapted to determine the algorithmic model as a function of information relative to the air traffic controller by learning, carried out by computer, of a neural network (63), as a function of said stored set of instructions and said stored information relative to the air traffic and associated with said instructions.
- said platform being adapted to obtain an electronic test device (6) of the air traffic control electronic control system (2) including said algorithmic model (63) for automatically determining instructions.
